**Europäisches Patentamt**

**European Patent Office**

**Office européen des brevets**

(19)

(11) Veröffentlichungsnummer: **0 075 199**
**A1**

## (12) EUROPÄISCHE PATENTANMELDUNG

(21) Anmeldenummer: **82108282.3**

(22) Anmeldetag: **09.09.82**

(51) Int. Cl.³: **G 01 S 13/02**, G 01 V 3/12,
A 63 B 29/02

(30) Priorität: **17.09.81 DE 3137012**

(43) Veröffentlichungstag der Anmeldung: **30.03.83**
**Patentblatt 83/13**

(84) Benannte Vertragsstaaten: **AT BE CH DE FR GB IT LI NL SE**

(71) Anmelder: **BROWN, BOVERI & CIE Aktiengesellschaft, Kallstadter Strasse 1, D-6800 Mannheim 31 (DE)**

(72) Erfinder: **Berthold, Rainer, Dipl.-Phys., Wielandstrasse 4, D-6901 Galberg (DE)**
Erfinder: **Strietzel, Reiner, Im Schnepfengrund 8, D-6900 Heidelberg 1 (DE)**

(74) Vertreter: **Kempe, Wolfgang, Dr. et al, c/o Brown, Boveri & Cie AG Postfach 351, D-6800 Mannheim 1 (DE)**

(54) **Verfahren und Vorrichtung zum Orten von Verschütteten.**

(57) Zum Orten von unter Erdreich (6) oder dergl. verschütteten Lebewesen (8) werden wenigstens zwei gebündelte elektromagnetische Hochfrequenz-Energiestrahlen (4) mit weit auseinander liegenden Frequenzen ($f_1$, $f_2$) in das Erdreich (6) eingestrahlt. Die an der Grenzfläche (7) zwischen Erdreich (6) und Lebewesen (8) reflektierten Strahlenanteile werden empfangen, verstärkt, entsprechend der charakteristischen Reflexionseigenschaften der Grenzfläche (7) zwischen Erdreich (6) und Lebewesen (8) bewertet und zur Anzeige gebracht.

Berücksichtigter Stand der Technik:
Funkschau 1981, Seite 50 bis 54
PTB-Mitteilungen 90–6/80, Seite 416 bis 433
DE-OS 2 628 193
IEE-Proc., Vol. 127, Pt.F., No. 4, August 1980, S. 319–321
Proc. IEEE, Vol. 60, No 6, June 1972, S. 692–718
Küpfmüller: «Einführung in die theoretische Elektrotechnik», Springer-Verlag 1965, S. 439–445 + 539.

0075199

BROWN, BOVERI & CIE   AKTIENGESELLSCHAFT
Mannheim                              6. Sept. 1982
Mp.-Nr. 636/81 EP                    ZPT/P3-Bi/Bt

## Verfahren und Vorrichtung zum Orten von Verschütteten.

Die Erfindung betrifft ein Verfahren und eine Vorrichtung zum Orten von unter Erdreich oder dergl. verschütteten Lebewesen.

Das Auffinden von Lebewesen - Menschen oder Tieren -, die infolge einer Katastrophe - Erdbeben, Erdrutsch, Lawine, Krieg - verschüttet worden sind, ist eine schwierige Aufgabe, da mit besonderem Zeitdruck gearbeitet werden muß, um die verschütteten Lebewesen möglicherweise noch lebend retten zu können. Es besteht aber auch die Notwendigkeit, verschüttete Lebewesen, die nicht mehr am Leben sind, aufzufinden.

Es sind bereits eine ganze Reihe von Verfahren zum Auffinden von Verschütteten bekannt und in Gebrauch. So werden beispielsweise Ertrunkene bzw. Lawinenverschüttete mit Hilfe von mechanischen Tastsonden geortet. Zum Auffinden von unter Lawinen, Erdreich oder Bauschutt Verschütteten werden speziell abgerichtete Hunde eingesetzt. Zum gleichen Zweck können auch empfindliche Horchgeräte verwendet werden, mit deren Hilfe von den
Verschütteten erzeugte Klopfzeichen, Stöhnlaute, Atemlaute oder Herzschläge geortet werden. Die Anwendung von
Horchgeräten muß jedoch dann scheitern, wenn im Suchgebiet gleichzeitig starke Geräuschquellen, beispielsweise
schwere Räumgeräte, im Einsatz sind.

Es hat nicht an Versuchen gefehlt, die zuvor beschriebenen Ortungsverfahren zu ersetzen durch elektrisch oder
magnetisch arbeitende Verfahren. So ist es beispielsweise aus der DE-OS 26 28 193 bekannt, durch Lawinen
gefährdeten Personen einen batteriebetriebenen Sender
mitzugeben, dessen Position unter einer Lawine dann mit
Hilfe der Funkpeilung schnell und sicher festgestellt
werden kann. Die Wirksamkeit eines Senders ist jedoch
davon abhängig, daß die Batterie ausreichend gewartet
wird, daß der Sender mit der zu schützenden Person fest
verbunden ist und nicht etwa nur die Lage des der zu
schützenden Person gehörenden Rucksacks angibt, und daß
die Frequenz des Senders mit der Frequenz des Suchgerätes übereinstimmt. Insbesondere das letzte Erfordernis
ist derzeit leider nicht immer gegeben.

Eine weitere übliche Möglichkeit besteht darin, der zu
schützenden Person einen Dauermagneten mitzugeben. Die
Lage des Dauermagneten und damit die Lage der Person
kann dann mit Hilfe eines empfindlichen Magnetometers,
einer sogenannten Förster-Sonde geortet werden. Dieses
Verfahren ist weder auf eine funktionstüchtige Batterie
noch auf eine genormte Sendefrequenz angewiesen. Es ist
lediglich erforderlich, daß die zu schützende Person den
georteten Dauermagneten bei sich trägt. Allerdings ist
der Umgang mit hochempfindlichen Magnetometern nicht
ganz einfach.

Die beiden zuletzt geschilderten Verfahren beruhen darauf, daß die zu schützende Person einen Gegenstand bei sich trägt, der den eigentlichen Ortungsvorgang erst ermöglicht. Die zu schützende Person muß demnach aktiv sein, bevor sie sich der Gefahr des Verschüttetwerdens aussetzt. Personen, die sich der Gefahr bewußt sind, beispielsweise Skifahrer und Hochalpinisten, werden zweifelsohne die erforderlichen Maßnahmen ergreifen. Wenn jedoch Lebewesen völlig unerwartet verschüttet werden, beispielsweise infolge eines Erdbebens oder eines Bombenangriffs, können die bekannten Peilverfahren nicht angewendet werden.

Es sind auch schon Geräte bekannt, mit deren Hilfe im Boden befindliche Metalle und Metalloxide geortet werden können. Alle diese Metallsuchgeräte werten die magnetischen Eigenschaften des Bodens bzw. der zu suchenden Metalle aus. Mit Hilfe der durch die gesuchten Metalle hervorgerufenen Permeabilitätsänderung im Boden wird entweder ein Schwingkreis verstimmt, die Kopplung zwischen einer Sende- und einer Detektorspule verändert oder das Zusammenbrechen eines von einem Gleichstrom im Boden aufgebauten Magnetfelds ausgewertet. Eine Übersicht über Metallsuchgeräte und ihre Wirkungsweise findet sich in der DE-Zeitschrift "Funkschau", 14/1981, Seite 50 bis 54. Mit den bekannten Metallsuchgeräten können Lebewesen - lebende und tote - nicht geortet werden.

Der vorliegenden Erfindung liegt die Aufgabe zugrunde, ein Verfahren der eingangs genannten Art anzugeben, welches die Ortung von nicht mit speziellen Einrichtungen ausgerüsteten Verschütteten ermöglicht und welches eine Aussage darüber erlaubt, ob es sich bei dem georteten Objekt um ein Lebewesen handelt oder nicht.

Diese Aufgabe wird gelöst durch die kennzeichnenden Merkmale des Hauptanspruchs.

Bei der Erfindung handelt es sich um ein Funkortungsverfahren, bei dem elektromagnetische Wellen ausgestrahlt und die von dem zu ortenden Objekt reflektierten Wellen empfangen und ausgewertet werden. Im Gegensatz zu dem bekannten Radar-Verfahren wird jedoch nicht die Laufzeit der elektromagnetischen Welle von der Sendeantenne zum Objekt und wieder zurück ausgewertet; es werden vielmehr die charakteristischen Reflexionseigenschaften der Grenzfläche zwischen Erdreich und Lebewesen ausgewertet. Die Erfindung macht von der Tatsache Gebrauch, daß beim Übertritt einer elektromagnetischen Welle von einem ersten Medium in ein zweites Medium Reflexionen auftreten und daß die Reflexion unmittelbar abhängig ist von den elektromagnetischen Eigenschaften der beiden Medien. Die Erfindung macht ferner von der ebenfalls schon seit vielen Jahrzehnten bekannten Tatsache Gebrauch, daß die elektromagnetischen Eigenschaften von biologischem Material, wie Muskelgewebe, Fettgewebe, Knochen usw., stark frequenzabhängig sind und sich erheblich von den elektromagnetischen Eigenschaften von nicht biologischem Material, z.B. Erdreich, unterscheiden.

Vorteilhafterweise werden die Frequenzen der Energiestrahlen so gewählt, daß sie jeweils in einem der drei Haupt-Dispersionsbereiche von Muskelgewebe liegen. In den Haupt-Dispersionsbereichen sind jeweils besondere Mechanismen für die elektromagnetischen Eigenschaften des Muskelgewebes verantwortlich, was zu ganz charakteristischen elektromagnetischen Eigenschaften des Muskelgewebes führt, die dann die Unterscheidung ermöglichen.

Vorzugsweise werden die Energiestrahlen kontinuierlich oder quasikontinuierlich gewobbelt. Die Wobbelung erfolgt vorteilhafterweise etwa über die Bandbreite des

636/81EP 5 0075199

zugehörigen Dispersionsbereichs. Man erhält auf diese Weise als Ergebnis der Messung eine Kurve, die die Abhängigkeit der elektromagnetischen Eigenschaften des georteten Objekts von der Frequenz darstellt, wodurch die Unterscheidung zwischen Lebewesen und Nicht-Lebewesen besonders vereinfacht wird.

Gemäß einer vorteilhaften Weiterbildung werden vertikal polarisierte Energiestrahlen eingesetzt. Es hat sich gezeigt, daß vertikal polarisierte Energiestrahlen an der Grenzfläche zwischen Luft und Erdreich wesentlich weniger reflektiert werden als horizontal polarisierte, so daß die zum Erreichen einer bestimmten Ortungstiefe nötige Senderleistung in entsprechender Weise erheblich geringer bleiben kann.

Vorzugsweise werden die Energiestrahlen gepulst. Mit Hilfe dieser Technik lassen sich große Ortungstiefen erreichen, ohne daß gleichzeitig die Gefahr besteht, daß das geortete Lebewesen durch die auftreffende nicht reflektierte Strahlung geschädigt wird.

Gemäß einer Alternative wird die Leistung der Energiestrahlen ausgehend von einem ungefährlichen Wert gesteigert, bis ein charakteristisches Reflexionssignal empfangen wird. Vorzugsweise wird ein bestimmtes Gebiet des Erdreichs mit stufenweise steigender Leistungsdichte der Energiestrahlen mehrfach abgesucht. Hierdurch wird sichergestellt, daß Verschüttete, die in geringer Tiefe liegen, nicht strahlengeschädigt werden, daß aber andererseits Verschüttete, die in größerer Tiefe liegen, nach Bergen der zunächst entdeckten ebenfalls noch aufgefunden werden.

Um die Reflexion der Energiestrahlen an der Grenzfläche zwischen Luft und Erdreich und den daraus resultierenden

636/81EP 6 0075199

Energieverlust zu vermeiden, wird gemäß einer bevorzugten Weiterbildung vorgeschlagen, die Energiestrahlen direkt im Erdreich abzustrahlen bzw. zu empfangen. Zu diesem Zweck wird die Antenne entweder auf das Erdreich aufgesetzt oder in das Erdreich eingeführt. Bei diesem Verfahren muß die Antenne auf die elektromagnetischen Eigenschaften des sie umgebenden Erdreichs abgeglichen werden. Dabei fällt gleichzeitig eine Information über die elektromagnetischen Eigenschaften des Erdreichs, die auch die Reflexionseigenschaften an der Grenzfläche zwischen Lebewesen und Erdreich beeinflußt, an.

Der vorliegenden Erfindung liegt ferner die Aufgabe zugrunde, eine Vorrichtung zur Durchführung des Ortungsverfahrens anzugeben.

Diese Aufgabe wird gelöst durch die kennzeichnenden Merkmale des Anspruchs 9.

Wesentliche Eigenschaft der Vorrichtung ist es, die von der Grenzfläche zwischen Erdreich und Lebewesen reflektierte Strahlung von allen anderen reflektierten Strahlungsanteilen zu trennen. Dies ist besonders deshalb schwierig, weil die elektromagnetischen Wellen auf ihrem Weg durch das Erdreich umso stärker gedämpft werden, je feuchter das Erdreich ist, während gleichzeitig die Reflexion an der Grenzfläche zwischen Luft und Erdreich immer stärker wird und das schwache Meßsignal zu überdecken droht.

Gemäß einer vorteilhaften Weiterbildung wird als Gleichrichter ein phasenempfindlicher Synchrondetektor verwendet. Synchrondetektoren machen es möglich, gleichfrequente Signale zu unterdrücken, wenn deren Phasenlage von der des eigentlichen Meßsignals abweicht. Eine derartige Abweichung kann beim Gegenstand der vorliegen-

636/81EP 7 0075199

den Erfindung immer vorausgesetzt werden, da die elektromagnetische Welle bei ihrem Gang durch das Erdreich
und bei der Reflexion an der Grenzfläche zwischen
Erdreich und Lebewesen eine bestimmte Phasenverschiebung
gegenüber dem an der Grenzfläche zwischen Luft und
Erdreich reflektierten Signal erleidet.

Gemäß einer vorteilhaften Weiterbildung wird zur Eliminierung der von der Grenzfläche "Erde-Luft" reflektierten Strahlung ein Homodyn-System als Sende- und
Empfangsschaltung verwendet. Ein derartiges Homodyn-System ist beispielsweise bekannt aus der DE-OS 25 24 571
oder der DE-OS 31 50 704. Mit Hilfe dieser Sende- und
Empfangsschaltung kann die unangenehme Eigenschaft des
Erdbodens vollautomatisch kompensiert werden, die darin
besteht, daß mit zunehmendem Feuchtigkeitsgehalt des
Erdbodens der an der Erdoberfläche reflektierte Strahlungsanteil sehr stark anwächst auf Kosten des in den
Erdboden eindringenden Strahlungsanteils und daß dadurch
die schwachen Reflexionsanteile von der Grenzfläche
"Erdboden-Lebewesen" überdeckt werden.

Vorteilhafterweise ist die Sendeantenne gleichzeitig
Empfangsantenne und die Verbindung zwischen HF-Generatorantenne und Verstärker erfolgt über einen Richtkoppler. Es leuchtet ein, daß eine Ortungsvorrichtung mit
nur einer Antenne sowohl bei der Herstellung als auch
bei der Anwendung Vorteile bringt. Andererseits kann
eine räumliche Trennung von Sende- und Empfangsantenne
dazu dienen, unerwünschte Reflexionsanteile am Eintritt
in die Empfangsantenne zu hindern.

Anhand der Zeichnung soll die Erfindung in Form eines
Ausführungsbeispiels näher erläutert werden.

Es zeigen:

Fig. 1 ein Blockschaltbild einer Ortungsvorrichtung,
Fig. 2 die Frequenzabhängigkeit des spezifischen Widerstandes $\varrho$ von Muskelgewebe,
Fig. 3 die Frequenzabhängigkeit der relativen Dielektrizitätszahl $\varepsilon_r$ von Muskelgewebe,
Fig. 4 die Frequenzabhängigkeit der relativen Dielektrizitätszahl $\varepsilon_r$ bzw. der spezifischen Leitfähigkeit $\sigma$ von reinem Wasser.

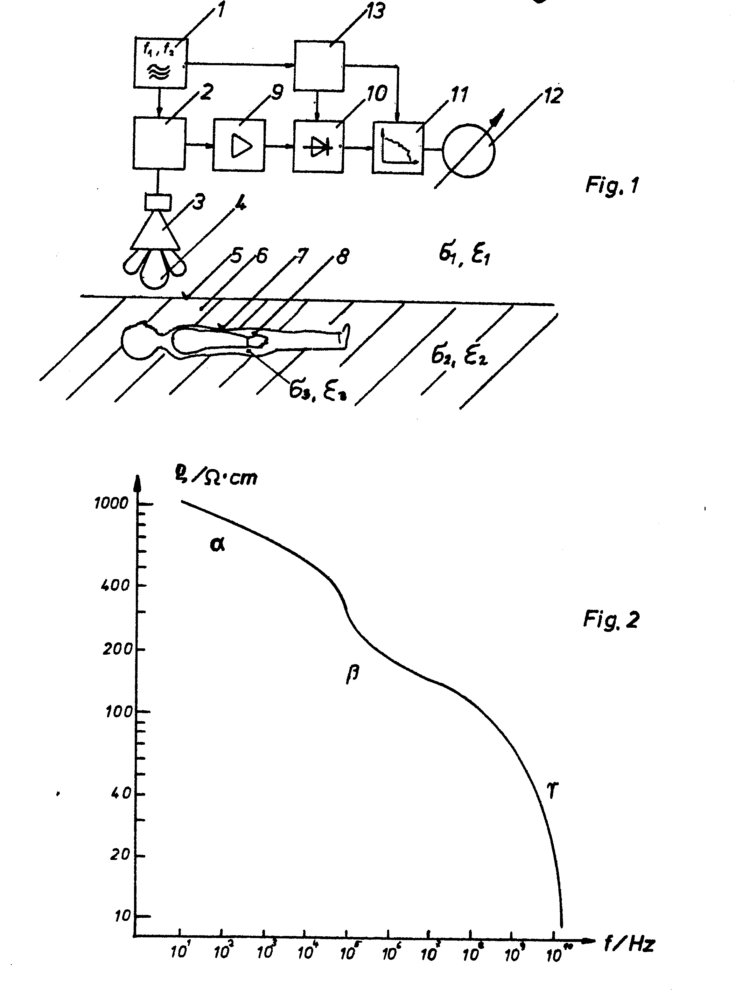

In Fig. 1 erkennt man einen Hochfrequenz-Generator 1 mit variabler Ausgangsfrequenz, der über einen Richtkoppler 2 eine Sende- und Empfangsantenne 3 speist. Die Antenne 3 ist als Hornstrahler dargestellt, um die bündelnde Eigenschaft zu symbolisieren.

Die Antenne 3 sendet einen gebündelten Energiestrahl 4 in Richtung auf das Erdreich 6 aus. Ein Teil des Energiestrahls 4 wird an der Grenzfläche 5 zwischen Luft und Erdreich 6 reflektiert, ein Teil dringt in das Erdreich ein und gelangt an eine Grenzfläche 7 zwischen Erdreich 6 und einem verschütteten Lebewesen 8. An der Grenzfläche 7 wird ein Teil der elektromagnetischen Strahlung wieder reflektiert und gelangt durch das Erdreich 6 und die Grenzfläche 5 zwischen Luft und Erdreich 6 zurück zu der Antenne 3. Von der Antenne 3 gelangt das Signal über den Richtkoppler 2 auf einen Verstärker 9 und von dort zu einem phasenempfindlichen Synchrongleichrichter 10. Vom Synchrongleichrichter 10 gelangt das demodulierte Signal auf ein Filter 11, welches auf die charakteristischen Reflexionseigenschaften der Grenzfläche 7 zwischen Erdreich 6 und Lebewesen 8 abgestimmt ist und von da auf eine Anzeigevorrichtung 12.

Ein Teil der vom Generator 1 erzeugten Hochfrequenzenergie wird über einen Abschwächer und Phasenschieber 13

sowohl auf den Synchrongleichrichter 10 als auch auf das Filter 11 gegeben, um die einwandfreie Funktion dieser beiden Komponenten zu gewährleisten. In Fig. 1 sind auch die charakteristischen Parameter der Medien eingetragen, die an der Enstehung des Ortungssignals beteiligt sind. Für Luft sind dies die relative Dielektrizitätszahl $\mathcal{E}_1 = 1$ und die spezifische Leitfähigkeit $\sigma_1 = 0$; für Erdreich sind dies die relative Dielektrizitätszahl $\mathcal{E}_2$ und die spezifische Leitfähigkeit $\sigma_2$, die beide von der jeweiligen Art Erdreich abhängig, von der Frequenz dagegen praktisch unabhängig sind; für das Lebewesen sind es die relative Dielektrizitätszahl $\mathcal{E}_3$ und die spezifische Leitfähigkeit $\sigma_3$, die in charakteristischer Weise abhängig sind von der Frequenz und von der Art des biologischen Gewebes.

Da das erfindungsgemäße Verfahren zur Ortung von Verschütteten stark abhängig ist von der Bodenbeschaffenheit, muß unter Umständen mit sehr hoher Leistungsdichte gearbeitet werden, um in tiefer liegende Schichten zu gelangen. Die Folge wäre, daß Verschüttete, die in nur geringer Tiefe liegen, unter Umständen einer Mikrowellenleistungsdichte ausgesetzt würden, die weit über dem zulässigen Grenzwert von 10 mW/cm$^2$ liegt. Um dies sicher zu verhindern, wird die Leistung der elektromagnetischen Strahlung derart gesteuert, daß das abzusuchende Gebiet des Erdreichs zunächst mit einer ungefährlichen Leistung überstrichen wird. Die Leistung wird automatisch solange erhöht bis der Empfänger ein charakteristisches Reflexionssignal empfängt. Das Absuchen eines bestimmten Gebietes kann entweder durch Ausleuchten einer einstellbaren Fläche mit Energiestrahlung oder durch rasterartiges Abtasten erfolgen.

Es braucht nicht extra betont zu werden, daß nach Bergung eines in geringer Tiefe liegenden Verschütteten dieselbe Fläche des Erdreichs weiter abgesucht wird, bis die maximale Ortungstiefe erreicht ist, um sicherzustellen, daß alle Verschütteten entdeckt werden. Erst wenn die maximale Energiestrahlungsleistung erreicht ist, wird an einer benachbarten Stelle ein neuer Ortungsvorgang wieder mit minimaler Energieeinstrahlung begonnen.

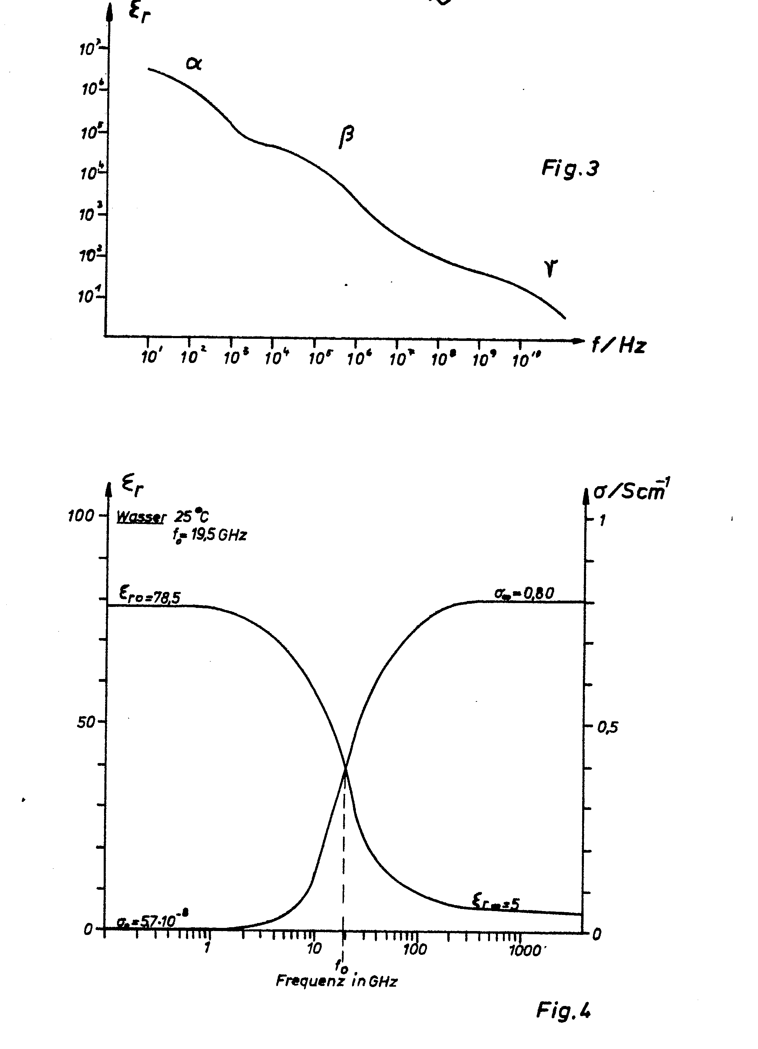

Fig. 2 zeigt die Frequenzabhängigkeit des spezifischen Widerstandes von Muskelgewebe, Fig. 3 die zugehörige Frequenzabhängigkeit der relativen Dielektrizitätszahl. Eingetragen sind die charakteristischen Haupt-Dispersionsbereiche $\alpha$, $\beta$, $\gamma$, in denen jeweils verschiedene Relaxationsmechanismen wirksam sind, die für die gemessene Kurve charakteristisch sind.

Fig. 4 zeigt die Frequenzabhängigkeit der relativen Dielektrizitätszahl $\varepsilon_r$ und der spezifischen Leitfähigkeit $\sigma$ für reines Wasser. Die Dielektrizitätszahl ist für Frequenzen unter etwa 1 GHz konstant gleich 78,5 und nimmt mit zunehmender Frequenz ab bis auf einen Wert von etwa 5. Ein annähernd reziprokes Verhalten zeigt die elektrische Leitfähigkeit $\sigma$. Dieses sogenannte Relaxationsverhalten von $\varepsilon_r$ und $\sigma$ läßt sich mit der Kraftwirkung des elektromagnetischen Feldes auf das polare Wassermolekül erklären. Charakteristisch ist eine bestimmte Relaxationsfrequenz, die hier bei 19,5 GHz liegt. Bei dieser Frequenz liegt auch das Maximum der Absorption für elektromagnetische Strahlung. Bei sehr viel höheren Frequenzen treten weitere Dispersionsbereiche auf infolge von Atompolarisation und Elektronenpolarisation.

Die Kurven der Figuren 2, 3 und 4 sind entnommen aus der DE-Zeitschrift "PTB-Mitteilungen" 90, 6/1980, Seite 416 bis 433.

Den Fig 2 und 3 kann außerdem entnommen werden, was im Sinne der Erfindung unter "weit auseinanderliegende Frequenzen" verstanden wird. Die Frequenzen müssen so weit auseinanderliegen, daß die sich aus der Frequenzabhängigkeit von spezifischer Leitfähigkeit und relativer Dielektrizitätszahl ergebenden charakteristischen Reflexionseigenschaften der Grenzfläche zwischen Erdreich und Lebewesen bestimmt werden können.

Im folgenden soll anhand von einfachen Rechenbeispielen die Wirkungsweise der Erfindung erläutert werden. Fällt eine ebene elektromagnetische Welle, die sich in einem ersten Medium ausbreitet, auf die ebene Trennfläche zu einem zweiten Medium, so wird ein Teil der einfallenden Welle reflektiert, während der restliche Anteil in das zweite Medium eindringt. Die Formeln für die Fresnelsche Reflexion lauten:

$$r_V = \frac{Z_1 \cdot \cos\beta_1 - Z_2 \cdot \cos\beta_2}{Z_1 \cdot \cos\beta_1 + Z_2 \cdot \cos\beta_2}$$

$$r_H = \frac{Z_2 \cdot \cos\beta_1 - Z_1 \cdot \cos\beta_2}{Z_2 \cdot \cos\beta_1 + Z_1 \cdot \cos\beta_2}$$

$r_V$ ist der Reflexionskoeffizient für vertikal polarisierte Wellen (der H-Vektor steht senkrecht zur Einfallsebene); $r_H$ ist der Reflexionskoeffzient für horizontal polarisierte Wellen (der H-Vektor liegt in der Einfallsebene).

$\beta_1$ ist der Einfallswinkel der elektromagnetischen Welle im ersten Medium; $\beta_2$ ist der Ausfallswinkel der gebrochenen elektromagnetischen Welle im zweiten Medium.

$Z_1$ und $Z_2$ sind die Wellenwiderstände des ersten bzw. des zweiten Mediums. Der Wellenwiderstand errechnet sich gemäß der Formel

$$Z = \sqrt{\frac{j \cdot \omega \cdot \mu}{\sigma + j \omega \varepsilon}}$$

Beim Durchlaufen eines verlustbehafteten Mediums wird die elektromagnetische Welle geschwächt. Diese Schwächung ist abhängig vom Absorptionskoeffzienten $\alpha$ des jeweiligen Mediums. Er errechnet sich gemäß der Formel

$$\alpha = \omega \sqrt{\frac{\mu \cdot \varepsilon}{2} \cdot \left( \sqrt{1 + \frac{\sigma^2}{\omega^2 \varepsilon^2}} - 1 \right)}$$

In den vorstehenden Formeln bedeuten:

$\omega = 2 \cdot \pi \cdot f$

$\mu = \mu_0 \cdot \mu_r$

$\varepsilon = \varepsilon_0 \cdot \varepsilon_r$

Da das erfindungsgemäße Ortungsverfahren auf der Frequenzabhängigkeit des Reflexionsfaktors beruht, wird im folgenden auf die Absorption nicht weiter eingegangen.

Unter der Vorraussetzung, daß die zur Ortung verwendete Energiestrahlung senkrecht auf die Grenzflächen einfällt $( \beta_1 = \beta_2 = 0 )$ und daß die beteiligten Medien die relative Permeabilitätszahl $\mu_r = 1$ besitzen, was für Luft, Erdreich und Muskelgewebe im allgemeinen erfüllt ist, vereinfacht sich die oben angegebene Formel für den Reflexionsfaktor zu

$$r_H = \frac{\sqrt{\sigma_1 + j \cdot \omega \cdot \varepsilon_0 \cdot \varepsilon_{r_1}} - \sqrt{\sigma_2 + j \cdot \omega \cdot \varepsilon_0 \cdot \varepsilon_{r_2}}}{\sqrt{\sigma_1 + j \cdot \omega \cdot \varepsilon_0 \cdot \varepsilon_{r_1}} + \sqrt{\sigma_2 + j \cdot \omega \cdot \varepsilon_0 \cdot \varepsilon_{r_2}}}$$

Zieht man aus den komplexen Zahlen in Zähler und Nenner die Wurzel unter Verwendung der bekannten Formel von Moivre, so erhält man nach längerer Umrechnung unter Erweiterung des Bruches mit den konjugiert komplexen Zahlen des Nenners und unter Zusammenfassung von Realteil und Imaginärteil folgende Formel für den Refle- xionsfaktor

$$r_H = \frac{A^2 - B^2 + j\left(\sqrt{A^2 B^2 + \sigma_2 A^2 - \sigma_1 B^2 - \sigma_1 \sigma_2} - \sqrt{A^2 B^2 - \sigma_2 A^2 + \sigma_1 B^2 - \sigma_1 \sigma_2}\right)}{A^2 + B^2 + \sqrt{A^2 B^2 + \sigma_2 A^2 + \sigma_1 B^2 + \sigma_1 \sigma_2} + \sqrt{A^2 B^2 - \sigma_2 A^2 - \sigma_1 B^2 + \sigma_1 \sigma_2}}$$

Bildet man daraus den Betrag des Reflexionsfaktors $r_H$, so erhält man

$$|r_H| = \frac{\sqrt{A^4 + B^4 - 2\sigma_1 \sigma_2 - 2\sqrt{A^4 B^4 - \sigma_2^2 A^4 - \sigma_1^2 B^4 + \sigma_1^2 \sigma_2^2}}}{A^2 + B^2 + \sqrt{A^2 B^2 + \sigma_2 A^2 + \sigma_1 B^2 + \sigma_1 \sigma_2 + A^2 B^2 - \sigma_2 A^2 - \sigma_1 B^2 + \sigma_1 \sigma_2}}$$

Darin bedeuten:

$$A = \sqrt[4]{\sigma_1^2 + \omega^2 \cdot \varepsilon_1^2}$$
$$B = \sqrt[4]{\sigma_2^2 + \omega^2 \cdot \varepsilon_2^2}$$

Die folgenden Tabellen zeigen die Ergebnisse von Modellrechnungen, die unter diesen vereinfachten Bedingungen durchgeführt wurden. Dabei zeigt Tabelle 1 die Reflexionswerte an der Grenzfläche zwischen Luft und trockener Erde bzw. zwischen trockener Erde und Muskelgewebe, Tabelle 2 die Reflexionswerte an der Grenzfläche zwi-

636/81EP 14 0075199

schen Luft und Lehmerde bzw. zwischen Lehmerde und Muskelgewebe. Die spezifische Leitfähigkeit $\sigma$ ist in der Einheit "S·m$^{-1}$" angegeben.

Tabelle 1

| f/Hz | Luft | | trock. Erde | | Muskel | | r1/2 | r2/3 |
|---|---|---|---|---|---|---|---|---|
| | $\sigma_1$ | $\varepsilon_1$ | $\sigma_2$ | $\varepsilon_2$ | $\sigma_3$ | $\varepsilon_3$ | | |
| $10^4$ | 0 | 1 | $10^{-4}$ | 4 | 0,16 | 50000 | 0,90 | 0,95 |
| $10^5$ | 0 | 1 | $10^{-4}$ | 4 | 0,29 | 16000 | 0,70 | 0,96 |
| $10^6$ | 0 | 1 | $10^{-4}$ | 4 | 0,53 | 2400 | 0,37 | 0,96 |
| $10^7$ | 0 | 1 | $10^{-4}$ | 4 | 0,66 | 2700 | 0,33 | 0,91 |
| $10^8$ | 0 | 1 | $10^{-4}$ | 4 | 0,84 | 77 | 0,33 | 0,77 |
| $10^9$ | 0 | 1 | $10^{-4}$ | 4 | 1,5 | 40 | 0,33 | 0,57 |

Tabelle 2

| f/Hz | Luft | | Lehm | | Muskel | | $r_{1/2}$ | $r_{2/3}$ |
|---|---|---|---|---|---|---|---|---|
| | $\sigma_1$ | $\varepsilon_1$ | $\sigma_2$ | $\varepsilon_2$ | $\sigma_3$ | $\varepsilon_3$ | | |
| $10^4$ | 0 | 1 | 0,071 | 25 | 0,16 | 50000 | 0,996 | 0,21 |
| $10^5$ | 0 | 1 | 0,071 | 25 | 0,29 | 16000 | 0,988 | 0,36 |
| $10^6$ | 0 | 1 | 0,071 | 25 | 0,53 | 2400 | 0,96 | 0,47 |
| $10^7$ | 0 | 1 | 0,071 | 25 | 0,66 | 270 | 0,87 | 0,51 |
| $10^8$ | 0 | 1 | 0,071 | 25 | 0,84 | 77 | 0,69 | 0,45 |
| $10^9$ | 0 | 1 | 0,071 | 25 | 1,50 | 40 | 0,67 | 0,21 |

Ansprüche

1. Verfahren zum Orten von unter Erdreich oder dergleichen verschütteten Lebewesen mit Hilfe elektromagnetischer Energie, dadurch gekennzeichnet, daß wenigstens zwei gebündelte elektromagnetische HF-Energiestrahlen (4) mit weit auseinanderliegenden Frequenzen ($f_1$, $f_2$) in das Erdreich (6) eingestrahlt werden, und daß die reflektierten Strahlenanteile empfangen, verstärkt und entsprechend den charakteristischen Reflexionseigenschaften der Grenzfläche (7) zwischen Erdreich (6) und Lebewesen (8) bewertet werden.

2. Verfahren nach Anspruch 1, dadurch gekennzeichnet, daß die Frequenzen ($f_1$, $f_2$) der Energiestrahlen (4) jeweils in einem der drei Haupt-Dispersionsbereiche ( $\alpha$ , $\beta$ , $\gamma$ ) von Muskelgewebe gewählt werden.

3. Verfahren nach Anspruch 1 oder 2, dadurch gekennzeichnet, daß die Energiestrahlen (4) kontinuierlich bzw. quasikontinuierlich gewobbelt werden.

4. Verfahren nach Anspruch 1, 2 oder 3, dadurch gekennzeichnet, daß vertikal polarisierte Energiestrahlen (4) eingesetzt werden.

5. Verfahren nach wenigstens einem der Ansprüche 1 bis 4, dadurch gekennzeichnet, daß die Energiestrahlen (4) gepulst werden.

6. Verfahren nach wenigstens einem der Ansprüche 1 bis 4, dadurch gekennzeichnet, daß die Leistung der Energiestrahlen (4) ausgehend von einem ungefährlichen Wert gesteigert wird, bis ein charakteristischer Reflexionssignal empfangen wird.


7. Verfahren nach Anspruch 6, dadurch gekennzeichnet, daß ein bestimmtes Gebiet des Erdreichs (6) mit
stufenweise steigender Leistungsdichte der Energiestrahlen (4) mehrfach abgesucht wird.


8. Verfahren nach wenigstens einem der Ansprüche 1
bis 7, dadurch gekennzeichnet, daß die Energiestrahlen
(4) direkt im Erdreich (6) abgestrahlt bzw. empfangen
werden.


9. Vorrichtung zur Durchführung des Verfahrens nach
den Ansprüchen 1 bis 8, dadurch gekennzeichnet, daß sie
einen HF-Generator (1), eine Sende- und eine Empfangsantenne (3), einen Verstärker (9) für die empfangenen
Signale, einen Gleichrichter (10) und ein auf die charakteristischen Reflexionseigenschaften der Grenzfläche
(7) zwischen Erdreich (6) und Lebewesen (8) abgestimmtes
Filter (11) enthält.


10. Vorrichtung nach Anspruch 9, dadurch gekennzeichnet, daß die Sendeantenne (3) gleichzeitig
Empfangsantenne (3) ist und daß die Verbindung zwischen
HF-Generator (1), Antenne (3) und Verstärker(9) über
einen Richtkoppler (2) erfolgt.


11. Vorrichtung nach Anspruch 9 oder 10, dadurch
gekennzeichnet, daß der Gleichrichter (10) ein phasenempfindlicher Synchrondetektor ist.


12. Verfahren nach wenigstens einem der Ansprüche 1
bis 11, dadurch gekennzeichnet, daß zur Eliminierung der
von der Grenzfläche "Erde-Luft" reflektierten Strahlung
ein Homodyn-System als Sende- und Empfangsschaltung
verwendet wird.

Fig. 1

Fig. 2

Fig.3

Fig.4

Europäisches Patentamt

**EUROPÄISCHER RECHERCHENBERICHT**

Nummer der Anmeldung

EP 82 10 8282

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| | --- | | G 01 S 13/02 |
| Y | FR-A-2 402 453 (C. MORAND) <br> * Figur 1 * | 1 | G 01 V 3/12 <br> A 63 B 29/02 |
| | --- | | |
| Y | DE-A-2 264 037 (GEOPHYSICAL SURVEY SYSTEMS) <br> * Figur 1 * | 1 | |
| | --- | | |
| P,A | FR-A-2 479 989 (OFFICE NATIONAL D'ETUDES ET DE RECHERCHES AEROSPATIALES) <br> * Figur 1 * | 3 | |
| | --- | | |
| A | US-A-3 831 173 (R.M. LERNER) <br> * Figur 1 * | 5 | |
| | --- | | |
| A | DE-B-2 524 571 (RCA) <br> * Anspruch 1 * | 12 | **RECHERCHIERTE SACHGEBIETE (Int. Cl. ³)** |
| | --- | | |
| A | US-A-4 008 469 (J.C.CHAPMAN) <br><br> * Figuren 2, 3 * | | A 63 B 29/02 <br> G 01 S 13/02 <br> G 01 V 3/12 <br> G 01 V 3/17 |
| | --- | | |
| A | US-A-3 351 936 (A.M. FEDER) <br><br> * Figur 1 * | | |
| | ----- | | |

Der vorliegende Recherchenbericht wurde für alle Patentansprüche erstellt.

| Recherchenort <br> BERLIN | Abschlußdatum der Recherche <br> 18-11-1982 | Prüfer <br> BREUSING J |
|---|---|---|